# EUROPÄISCHE PATENTSCHRIFT

(11) **EP 2 670 554 B1**
(45) Veröffentlichungstag und Bekanntmachung des Hinweises auf die Patenterteilung: **03.05.2017**
(21) Anmeldenummer: 12712553.2
(22) Anmeldetag: 02.02.2012
(51) Int. Cl.: B23K 13/01, B23K 20/06, H05B 6/36, H05B 6/42

(54) **ELEKTROMAGNETISCHE PULSSCHWEISSGERÄTE ZUR BLECHVERSCHWEISSUNG MIT EINEM KÜHLISOLATOR**
ELECTROMAGNETIC PULSE WELDING DEVICES FOR WELDING METAL SHEETS USING A COOLING INSULATOR
APPAREILS DE SOUDAGE ELECTROMAGNETIQUE PULSE POUR LE SOUDAGE DE TOLES AVEC UN ISOLATEUR REFROIDISSANT

(30) Priorität: 03.02.2011 DE 102011010216
(43) Veröffentlichungstag der Anmeldung: 11.12.2013
(73) Patentinhaber: PST Products GmbH, 63755 Alzenau (DE)
(72) Erfinder: PASQUALE, Pablo, 63856 Bessenbach (DE)
(74) Vertreter: Pöhner, Wilfried Anton
(86) Internationale Anmeldenummer: PCT/DE2012/000081
(87) Internationale Veröffentlichungsnummer: WO 2012/103873

(56) Entgegenhaltungen:
- WO-A1-97/48515
- JP-A- 2004 342 535
- JP-A- 2008 055 505
- US-A1- 2003 197 007
- US-A1- 2006 175 310
- DATABASE WPI Week 200937 Thomson Scientific, London, GB; AN 2009-J88689 XP002679269, -& JP 2009 123542 A (DOKURITSU GYOSEI HOJIN RIKAGAKU KENKYUSH) 4. Juni 2009 (2009-06-04)

## Beschreibung

Die Erfindung bezieht sich auf ein elektromagnetisches Pulsschweißgerät zur Verbindung einer Blechplatte mit einem. Metallteil gemäß dem Oberbegriff des Anspruchs 1 (siehe, z.B., JP2004342535) und gemäß dem Oberbegriff des Anspruchs 5 (siehe, z.B., WO97/48515).

Auf aktuellem Stand der Technik ist als sog. "Sprengschweißen" bekannt, dass ein Blech zur Verbindung mit einem weiteren Metallteil mit einem streifenförmigen Teil seiner Oberflächen auf dem Metallteil aufschlägt und zwar unter einem spitzen Winkel und einer Geschwindigkeit von wenigstens 100 m/s, also mindestens 360 km/h.
Es ist ein weiteres Merkmal des Verfahrens, dass sich das Blech vor der Verschweißung in einem kleinen Abstand zu dem Metallteil befindet, der als Beschleunigungsweg dient. Dabei wird die zwischen den Metallteilen befindliche Luft stark beschleunigt und komprimiert und wirkt nahezu wie ein festes Werkzeug, welches die Oxidschichten von der Oberfläche der Metallteile abschabt.
Dadurch kommen metallisch reine Oberflächen miteinander in Berührung, die sich plastisch verformen und sich bis auf atomare Abstände einander annähern, sodass Gitterkräfte in Kraft treten, die sie miteinander verschweißen.
In einem auf aktuellem Stand der Technik bekannten Verfahren dient zur Erzeugung des Drucks die Detonation eines Sprengstoffes. Zur Verbindung von zwei horizontal aufeinander liegenden Blechplatten wird eine gleichmäßige, dünne Schicht aus Sprengstoff auf der Oberfläche der oberen Metallplatte ausgelegt, die der zu fügenden Fläche abgewandt ist. Auf diese Sprengstoffschicht wird eine relativ zur Sprengkraft sehr gewichtige Platte aufgelegt. Dann wird die Sprengstoffschicht mit einem elektrischen Zünder an einem Punkt am Rand oder in der Mitte gezündet und zur Detonation gebracht. Es entsteht eine Druckwelle, die sich entlang einer Front auf der Metallplatte ausbreitet.

Durch die massive obere Abdeckung kann die Druckwelle nicht nach oben hin frei entweichen, sonder "schlägt" die unter der Sprengstoffschicht befindliche Metallplatte auf die darunter befindliche, zweite Metallplatte oder den darunter befindlichen Metallkörper.

Infolge ihrer Massenträgheit bewegt sich die obere Metallplatte jedoch nicht als Ganzes, sondern es biegt sich nur der jeweils unter der Detonationszone liegende Blechabschnitt etwas ab und schlägt auf das Grundblech.

Auf aktuellem Stand der Technik ist es bekannt, an Stelle des Sprengstoffes zur partiellen Beschleunigung der Blechplatte eine Spule und ein davon mittels eines elektromagnetischen Impulses erzeugtes Magnetfeld einzusetzen. Dazu wird die elektrische Spule in der Nähe des aufzuschweißenden Bleches angeordnet und impulsartig von einem sehr hohen Strom durchflossen. Dieser Strom generiert ein erstes Magnetfeld, das in der Blechplatte Wirbelströme erzeugt. Diese Wirbelströme bewirken wiederum ein zweites Magnetfeld, das zu dem ersten Magnetfeld der Spule entgegen gerichtet ist, sodass sich beide Magnetfelder gegenseitig abstoßen. Letztlich wird kurzzeitig eine sehr hohe Kraft auf die erste Blechplatte ausgeübt, die sie partiell verformt, beschleunigt und auf die zweite Blechplatte aufschlagen lässt.

Das Patent JP 2008 055 505 zeigt eine dafür geeignete Spule. Sie besteht im Prinzip aus einer rechteckigen Metallplatte, in die von einer Kante her zwei zueinander parallele Schlitze eingeschnitten sind. Dadurch wird der Metallplatte die Form des Buchstaben E verliehen. Der mittlere Schenkel des E wird mit dem einen Pol der Stromquelle verbunden und die beiden äußeren Schenkel werden parallel mit einander verschaltet und an den anderen Pol der Stromquelle angeschlossen. Der Strom fließt durch den mittleren Schenkel in die Spule hinein und durch die beiden äußeren Schenkel wieder heraus. Dadurch wird ein Magnetfeld ausgebildet, das im Bereich des mittleren Schenkels seine größte Feldstärke hat. Deshalb wird der mittlere Schenkel der E-förmigen Spule parallel und in einem kleinen Abstand zu dem zu verschweißenden Bereich der Blechplatte angeordnet.

Der bislang größte Nachteil ist in der Praxis, dass die derzeit bekannten Spulen nur eine verhältnismäßig kurze Lebensdauer haben, da sie die zur Beschleunigung und Verformung der Blechplatte erforderlichen Gegenkräfte aufbringen müssen und dabei auch noch durch den Spannungsabfall an ihrem ohmschen Widerstand stark erhitzt werden.

Ein weiterer Nachteil ist, dass durch den großen Stromimpuls auch die Spule in sich selbst belastet wird. Die beiden äußeren Schenkel der E-förmigen Spule ziehen sich gegenseitig an, da sie in gleicher Richtung vom Strom durchflossen werden. Aber sie werden vom mittleren Schenkel abgestoßen, da der Strom darin in entgegen gesetzter Richtung fließt. Da sich diese beiden Wirkungen nicht vollständig gegeneinander aufheben, werden die Schenkel gegenüber dem senkrecht dazu verlaufenden Teil der Spule, der die Schenkel verbindet, mit einem Drehmoment beaufschlagt, dass nach einer hohen Anzahl von Einsätzen zum Abbrechen der Schenkel führt.
Ein weiterer Nachteil ergibt sich daraus, dass der mittlere Schenkel vorzugsweise relativ sehr schmal ausgeführt wird, damit in diesem Bereich eine besonders hohe Stromdichte und damit auch eine besonders hohe magnetische Feldstärke erreicht werden. Daraus resultiert ein relativ hoher ohmscher Widerstand des mittleren Schenkels, weshalb die thermische Belastung dieses Teils der Spule am höchsten ist. Deshalb droht in dieser belasteten Zone auch der frühzeitigste Bruch der Spule.
Aus der JP 2004342535 ist ein Pulsschweißgerät bekannt, bei der das Aktivteil von drei Seiten her über einen Wasserkanal mit Kühlflüssigkeit beaufschlagt wird. Auf dem Gebiet der Transmissionselektronenmikroskopie sind elektronmagnetische Linsen bekannt, bei denen die Spule durch eine in der Nachbarschaft geführte Kühlflüssigkeit eine Abkühlung erfährt (JP 2009123542 A).
Auf diesem Hintergrund hat sich die Erfindung die Aufgabe gestellt, eine Spule für das elektromagnetische Pulsverschweißen von Blechen mit anderen Metallteilen zu entwickeln, die höher belastbar ist, als die bisher auf dem Stand der Technik bekannten Spulen und die trotzdem eine höhere Lebensdauer erwarten lässt.

Als Lösung präsentiert die Erfindung ein Pulsschweißmessgerät mit den im Anspruch 1 und im Anspruch 5 angegebenen Merkmalen. Zur Verschweißung einer Blechplatte mit einem Metallteil fließt durch die Spule ein großer Stromimpuls, wobei in der Praxis zumeist eine Kondensatorbank als Stromquelle eingesetzt. Dadurch wird ein starkes, punkt- oder linienförmiges Magnetfeld aufgebaut, das im Blech Wirbelströme induziert. Die dadurch erzeugte Gegenkraft erzeugt einen derart hohen Druck, dass ein punkt- oder linienförmiger Bereich der Blechplatte von der Spule abgestoßen und auf eine sehr hohe Geschwindigkeit beschleunigt wird.

In Versuchen wurden im Bereich der höchsten magnetischen Feldstärke einer elektrischen Spule Geschwindigkeiten eines Blechbereiches von bis zu 720 m pro Sekunde, entsprechend 2.600 km pro Stunde erreicht. Bei derart hohen Geschwindigkeiten werden die benachbarten Bereiche des Bleches wegen ihrer Massenträgheit nicht auf die gleiche Geschwindigkeit beschleunigt, sondern verformt. Die Massenträgheit der noch weiter entfernten Bereiche des Bleches beschränkt die Verformung des Bleches jeweils auf einen streifenförmigen Bereich, innerhalb dessen das Blech jeweils zu einem etwa S-förmigen Profil verformt wird. Entsprechend dem Aufbau des Magnetfeldes breitet sich diese Verformung zu einem S entlang einer Frontlinie über die Oberfläche aus.

Die mit einer derart hohen Geschwindigkeit sich bewegende, S-förmige Frontlinie des Bleches prallt abrupt auf das Metallteil.

Dabei wird die zwischen den Metallteilen befindliche Luft so stark beschleunigt und komprimiert, dass sie sogar Überschallgeschwindigkeit erreichen kann, was zu dem bekannten Überschallknall führt. Die obersten Atomschichten des Bleches und des Metallteils und damit die auf jeder Metalloberfläche befindlichen Oxidhäute werden mit hoher Geschwindigkeit aus dem Raum zwischen Blech und Metallteil herausgeschleudert.

Die beiden Grenzschichten des Metallteiles und der Blechplatte weichen dem Druck aus und fließen kurzzeitig wie eine Flüssigkeit in Detonationsrichtung, wobei die Korngrenzen weitgehend erhalten bleiben. Dabei werden die grenznahen Schichten wechselseitig aufgestaut und ineinander geschoben, so dass eine wellenförmige Bindezone entsteht. Deren Wellenfronten verlaufen stets senkrecht zur Fortpflanzungsrichtung des Kollisionsvorganges, ähnlich den Wellen, die durch einen auftreffenden Stein auf der Wasseroberfläche ausgelöst werden. Das Wellenmuster in der Bindungszone ähnelt den quer zur Strömungsrichtung orientierten Rippen, die in einen Sandstrand durch ablaufendes Wasser eingeformt werden.

Ähnlich wie Wellen im Wasser können sich auch die Wellen in der Metallgrenzfläche überschlagen oder sogar einrollen. Nur wenn der Wirbel vor der Wellenkuppe zu stark wird, kann es dort zu einer Aufschmelzung oder Intermetallidbildung kommen.

Dadurch werden beim Aufschlagen des Bleches auf ein darunter angeordnetes Metallteil in den aufeinander treffenden Atomen Gitterkräfte wirksam, die - wie zuvor beim "Sprengschweißen" beschrieben - die Blechplatte mit dem Metallteil verschweißen.

Weil die Verbindung überwiegend durch den kurzzeitig hohen Druck bewirkt wird, wird die Schmelztemperatur der beteiligten Metalle nur in einer sehr flachen Zone entlang der Verbindungsfläche erreicht. Deren Tiefe beträgt in der Praxis meist nur 0,5 bis 5 µm.

Durch eine sehr schnelle Wärmeableitung aus dieser Zone in die metallische Umgebung bleiben dabei das Gefüge und die Körnung des Metalls erhalten. Anders als beim konventionellen Schmelzschweißen mit einer vergleichsweise sehr großen Verflüssigungszone entsteht beim Erstarren nach dem erfindungsgemäßen Schweißen ein extrem feinkörniges Gefüge, das gleichzeitig hohe Festigkeit und hohe Duktilität besitzt.

Daher kommt es auch nicht - wie beim Schmelzschweißen - zur Aufmischung der beiden zu verbindenden Metalle, die bei einer Reihe von Metallkombinationen die Entstehung spröder intermetallischer Phasen zur Folge hat.

Mit einem erfindungsgemäßen Pulsschweißgerät können sehr gleichmäßige und belastbare Verschweißungen erreicht werden, insbesondere auch von zwei Metallen mit sehr unterschiedlichem Schmelzpunkt. So können z.B. Aluminiumbleche auf Stahlträgern aufgeschweißt werden oder auch Kupfer und Titan miteinander verbunden werden.

Bei einer erfindungemäßen Spule unterscheidet sich die Größe des stromleitenden Querschnittes sehr deutlich zwischen dem sog. "Passivteil" der Spule - unterhalb dessen keine Verschweißung stattfindet - und dem sog. "Aktivteil" der Spule - unterhalb dessen die Verschweißung erfolgt. Im Aktivteil wird der Strom durch einen erheblich kleineren Querschnitt auf eine relativ sehr kleine Fläche "zusammengedrängt" wodurch unterhalb dieser Fläche eine sehr sichere und effiziente Verschweißung erreicht wird.

Hingegen ist unterhalb des Passivteiles durch dessen sehr viel größeren Querschnitt die magnetische Feldstärke so gering, dass in diesem Bereich der Blechplatte nur ein sehr viel geringeres oder vernachlässigbares Maß an Wirbelströmen erzeugt wird, so dass die Blechplatte in diesem Bereich nicht nennenswert beschleunigt und verformt wird.

Der überaus erwünschte Effekt, dass sich das magnetische Feld nahezu ausschließlich auf den Aktivteil konzentriert, würde jedoch bei einer Ausführung der Spule" gem. dem bekannten Stand der Technik als eine sog. "Luftspule" ohne eine weitere Isolierung oder Abstützung dazu führen, dass der Aktivteil nach einer relativ geringen Anzahl von Anwendungen beim Aufbringen der mechanischen Gegenkraft während einer Pulsverschweißung zerbricht.

Falls die Stromdichte im Aktivteil noch weiter gesteigert werden soll, um das davon erzeugte Magnetfeld noch weiter zu verstärken, könnte der Aktivteil dadurch derart hoch erhitzt werden, dass er schmilzt.

Dieser Effekt ist Prinzip von einer Schmelzsicherung bekannt ist. Ebenso wie der Aktivteil der erfindungsgemäßen Spule weist auch der Schmelzdraht einer Schmelzsicherung einen ganz erheblich geringeren Querschnitt als die übrigen Bestandteile der Stromführung auf. Im Unterschied zu einer Spule für das elektromagnetische Pulsschweißen ist eine Schmelzsicherung jedoch gezielt als ein Verschleißteil vorgesehen.

Es ist wesentlicher Gedanke der Erfindung, den Aktivteil der Spule gegen diese Belastungen dadurch abzusichern, dass der Aktivteil in Kontakt mit wenigstens einem Kühlisolator gebracht wird. Wie sein Name andeutet, dient er sowohl zur Abführung der am Aktivteil entstandenen Verlustwärme als auch zu dessen Isolierung. Deshalb weist er eine hohe thermische Leitfähigkeit und eine geringe elektrische Leitfähigkeit auf.

Eine weitere, in seinem Namen nicht enthaltene Funktion des Kühlisolators ist die mechanische Abstützung des Aktivteils. Bei einer Ausführung der Spule als E-förmige Spule verhindert der Kühlisolator z.B. zuverlässig, dass sich Aktivteil und Passivteil berühren.

Als ein besonderes geeignetes Material für den Kühlisolator hat sich Bornitrid erwiesen. Bornitrid, chemische Formel BN, ist eine Bor-Stickstoff-Verbindung, die in den beiden stabilen Modifikationen α-BN und β-BN vorkommt. Seine thermische Leitfähigkeit ist etwa fünfmal höher als bei Kupfer. Trotzdem weist Bornitrid nur eine relativ sehr geringe magnetische und elektrische Leitfähigkeit auf.

Das Prinzip der partiellen Anlagerung eines Kühlisolators an den Aktivteil einer Spule für das elektromagnetische Pulsschweißen von Blechplatten kann auf verschiedene Formen von Spulen angewendet werden.

Ein Beispiel ist die bereits zuvor als Stand der Technik genannte E-förmige Spule. Sie besteht aus einem länglichen Profil als Aktivteil, das auf zwei gegenüberliegenden Längsseiten von je einem Passivteil flankiert wird. Beide Passivteile verlaufen parallel zum und in einem Abstand vom Aktivteil. Der erfindungsgemäße Kühlisolator wird in diesem Fall in die beiden Zwischenräume zwischen dem Aktivteil und den beiden Passivteilen eingesetzt und liegt auf beiden Teilen jeweils flächig auf.

Eine weitere, sinnvolle Ausführung einer Spule für das elektromagnetische Pulsschweißen ist eine "zweiwindige" Spule, also eine Spule mit zwei Windungen. Hier interessiert besonders eine Ausführung, bei der alle Teile der Spule, mit Ausnahme eines Strombügels zur Verbindung der beiden Windungen in einer Ebene verlaufen, also aus einer Platte bestehen.

In dieser Ausführungsform sind die Aktivteile beider Windungen parallel und zueinander beabstandet angeordnet. Auf der dem Luftraum zwischen den beiden Aktivteilen gegenüberliegenden Fläche liegt jeweils ein Kühlisolator auf, an dessen gegenüberliegender Fläche der Passivteil einer jeden Windung anliegt. Jede Windung dieser zweiwindigen Spule entspricht also einer Hälfte der zuvor beschriebenen, E-förmigen Spule.

Der Vorteil einer solchen, zweiwindigen Spule ist, dass die Stromdichte und damit die magnetische Feldstärke gegenüber einer einwindigen Spule nahezu verdoppelt wird. Eine derartige Ausführung könnte ohne die Abstützung des Aktivteiles durch je einen Kühlisolator nicht betrieben werden, sondern würde bereits beim ersten Stromimpuls zerstört werden.
Eine weitere, sehr interessante Ausführungsform einer erfindungsgemäßen Spule ist eine sog. "Hammerspule", siehe Anspruch 5. Diese Bezeichnung leitet sich aus ihrer geometrischen Form ab, bei der der "Stiel" des Hammers durch zwei zumeist parallel zueinander verlaufende und zumeist plattenförmige Passivteile gebildet wird, an die an jeweils ein Ende ein quer dazu ausgerichtetes schmales Aktivteil angesetzt ist, das in Querrichtung über die beiden plattenförmigen Passivteile herausragt und so den Kopf der Hammerspule bildet.
Anders als bei den zuvor geschilderten, ein- und zweiwindigen Spulen, kann eine derartige Hammerspule nicht effizient aus einer Materialplatte heraus geschnitten werden. Eine interessante Ausführungsform besteht stattdessen aus einem länglichen schlanken Metallprofil als Aktivteil, von dem an beiden Enden jeweils ein kurzer Endabschnitt abgewinkelt ist, der jeweils mit einem Passivteil verbunden ist. Dabei sind die beiden Endabschnitte jeweils etwa parallel zueinander ausgerichtet. Sinnvollerweise ist der Querschnitt des Aktivteils erheblich kleiner als der Querschnitt der beiden Passivteile, damit sich das Magnetfeld auf den Bereich des Aktivteiles konzentriert. Daraus ergibt sich eine extrem hohe Stromdichte im Aktivteil, die nur dann das Aktivteil nicht sofort abschmilzt, wenn es mit zwei zueinander parallelen Flächen jeweils an einen Kühlisolator angrenzt.

Um diese Kühlisolatoren mit dem Aktivteil dauerhaft und belastbar zu verbinden, schlägt die Erfindung vor, dass um die Außenseiten beider Kühlisolatoren herum ein in sich geschlossenes Metallband verläuft oder eine andere Andruckvorrichtung auf den freien, zueinander parallelen Flächen der beiden Kühlisolatoren auflegt.

Um einen widerstandsarmen Übergang des Stromes vom Aktivteil in die Passivteile zu ermöglichen, schlägt die Erfindung vor, dass jeweils ein Endabschnitt in einer Nut in der Großfläche eines plattenförmigen Passivteiles befestigt ist.

Die Belastung einer erfindungsgemäßen Spule während eines Schweißvorganges wird dadurch weiter reduziert, dass im Bereich des Überganges vom Aktivteil zum Passivteil zumindest die Innenkanten, idealer Weise aber auch die gesamten Oberflächen kontinuierlich verrundet sind. Dadurch wird erreicht, dass beim Übergang vom Aktivteil zum Passivteil die Stromdichte kontinuierlich und nicht schlagartig absinkt, sodass thermische und mechanische "Sollbruchstellen" vermieden werden.

Wie bereits mehrfach erwähnt, ist es für das erfindungsgemäße Schweißverfahren unbedingt erforderlich, dass die Blechplatte vor der Verschweißung von dem zweiten Metallteil einen gewissen, kleinen Abstand hat, sodass sie beim Aktivieren des elektrischen Feldes über diesen Abstand hinweg beschleunigt werden kann und mit einer relativ hohen Geschwindigkeit und in einem spitzen Winkel auf dem anderen Metallteil aufschlägt. In der Praxis hat sich dafür in sehr vielen Fällen ein Abstand in einer Größenordnung von 0,3 bis 1,0 mm bewährt.

Versuche zeigten die besten Ergebnisse, wenn der Aufprall nicht senkrecht zur Oberfläche erfolgte, sondern das Blech soweit verformt wurde, dass sich ganz kurz vor dem Aufprall ein Winkel von etwa 2 bis 30 Grad zwischen den beiden Oberflächen einstellte. Nur bei einer derart "schräg gerichteten" Kollision kam es zur gewünschten plastischen Verformung der Werkstoffe und einer belastbaren Verbindung

Durch eine entsprechende Auswahl des Abstandes der beiden Blechplatten und der Formgebung der Spule und der dort hindurch fließenden Stromstärke lässt sich ein bestimmter Kollisionswinkel zwischen etwa 2 ° und 30° einstellen. Dann wird beim Aufprall des beschleunigten Blechabschnittes auf das darunter befindliche Metallteil die eingebrachte Energie in eine so hohe Druckspannung verwandelt, dass beide Metalle in einem ansonsten kalten Zustand innerhalb jeweils einer sehr dünnen Grenzschicht plastisch verformbar sind.

Um die Einhaltung des dafür geeigneten Abstandes vor dem Verschweißen sicherzustellen, werden im einfachsten Fall entsprechende Anschläge für die beiden miteinander zu verschweißenden Teile oder Distanzstücke genutzt.

Damit der Abstand nicht jedes Mal neu zu justieren ist oder entsprechende Abstandshalter eingesetzt werden müssen, schlägt die Erfindung als eine Alternative vor, dass in das zu verschweißende Blech wenigstens eine Auswölbung und/oder eine längliche Sicke eingeformt wird, deren Erhebung über die benachbarten Bereiche der Blechoberfläche dem zuvor genannten, zur Verschweißung erforderlichen Abstand zwischen Blechplatte und Metallteil entspricht.

Als eine erste Ausführungsform beschreibt die Erfindung, dass die Auswölbung oder die Sicke in der Mitte des zu verschweißenden Bereiches der Blechplatte angeordnet ist. Dann sollte der Aktivteil der Spule so angeordnet werden, dass sich die Druckwelle und damit die S-förmige Verformung des Bleches von dieser Sicke aus fortpflanzt. Damit wird erreicht, dass sich die miteinander verschweißte Fläche um die Auswölbung oder zu beiden Seiten der Sicke erstreckt.

Dabei ist es ohne Weiteres zu verschmerzen, dass auf einem Punkt in der Mitte oder entlang einer Linie inmitten der verschweißten Fläche die beiden Metallteile nicht miteinander verbunden sind, da sich zu beiden Seiten dieses Punktes oder dieser Linie eine qualitativ sehr hochwertig miteinander verschweißte Fläche erstreckt.

In einer zweiten, alternativen Ausführungsform schlägt die Erfindung vor, dass eine Reihe von zueinander beabstandeten Auswölbungen am Rand des zu verschweißenden Bereiches der Blechplatte angeordnet ist. Dann sollte die Verschweißung in der Mitte zwischen diesen Auswölbungen beginnen und sich im Verlauf der Verschweißung bis hin zu den Auswölbungen erstrecken. Idealerweise werden dann sogar die Auswölbungen mit in die verschweißte Fläche integriert und sind dann anschließend nicht mehr als solche erkennbar.

Der Vorzug des Abstandes zwischen den Auswölbungen ist, dass die beim Aufprall der Blechplatte und dem Beginn ihrer Verformung entstehende Druckwelle sich zwischen den Auswölbungen hindurch ausbreiten kann und deshalb einen ausreichenden Freiraum hat, um die von ihr abgetragenen Oxidschichten auf den Oberflächen beider Metallteile wegzublasen.

Wie bereits mehrfach erläutert, ist es ein charakteristisches Kennzeichen der erfindungsgemäßen Verschweißung, dass sich durch die aufgeschweißte Blechplatte von der Mitte des zu verschweißenden Bereiches aus eine S-förmige Verformung bis zum Rand des Schweißbereiches ausbreitet. Dieses S-förmige Profil am Rande des verschweißten Bereiches ist auf der gegenüberliegenden, nicht verschweißten Seite der Blechplatte als eine Vertiefung erkennbar.

Wenn die Forderung gestellt wird, dass eine derartige Vertiefung nach dem Verschweißen nicht zurückbleiben soll, so ist es denkbar, dass in die Blechplatte vor der Verschweißung eine nach oben, von dem Gegenstück weg gerichtete Auswölbung und/oder Sicke eingebracht wird, die komplementär zu derjenigen Ausformung der Blechplatte ist, die sich nach der Verschweißung einer zuvor ebenen Blechplatte einstellen würde. Durch die Verformung während des Schweißvorganges wird diese nach außen hin emporragende Auswölbung wieder "geglättet", sodass im Endergebnis eine ebene Fläche erzeugt wird.

Zu beachten ist, dass bei einer derartigen Konfiguration der Auswölbung oder Sicke die nicht mit dem zweiten Metallteil zu verschweißenden Bereiche der Blechplatte direkt und ohne Abstand aufliegen, sodass die bei der Verschweißung entstehende Druckwelle womöglich nicht in vollem Umfang abfließen kann.

Weil dadurch das Abtragen der Metalloxidschicht behindert werden könnte, schlägt die Erfindung als eine alternativer Verfeinerung vor, dass die nach außen hin gewölbte Auswölbung oder Sicke in ihrem Randbereich einige kleinere Kerben aufweist, durch welche hindurch die Druckwelle entweichen kann.

Eine weitere Verbesserung lässt sich dadurch erreichen, dass die zuvor in das Blech eingeprägte Auswölbung und /oder Sicke etwas schmäler als der zu verschweißende Bereich ist, sodass der Schweißvorgang selber die Auswölbung oder die Sicke wieder "planiert".

Für ein Pulsschweißverfahren mit einer zuvor eingeformten Auswölbung oder Sicke in der Blechplatte ist es denkbar, dass das Pulsschweißgerät zusätzlich auch das Einprägen der Auswölbung oder der Sicke übernimmt, sodass die Blechplatte nur einmal in eine darauf spezialisierte Maschine eingelegt oder eingespannt werden muss. Die Erfindung schlägt dafür eine Ausführung des Gerätes vor, bei der die zu verschweißende Blechplatte nur ein einziges Mal in eine geeignete Aufnahme eingelegt oder eingespannt wird. Dann wird in einem ersten Bearbeitungsschritt z.B. mittels elektromagnetischem Pulsfügen (EMPF) im oder am zu verschweißendem Bereich eine Auswölbung und/oder eine Sicke eingeformt. In einem zweiten Bearbeitungsschritt wird dieser Bereich der Blechplatte mit einem Metallteil verschweißt.

Der Vorteil eines derartigen Doppelgerätes ist die Einsparung von Arbeitszeit und der Zugewinn an Qualitätssicherheit durch die Vermeidung eines Bearbeitungsschrittes.

Im Folgenden sollen weitere Einzelheiten und Merkmale der Erfindung anhand von drei Beispielen näher erläutert werden. Diese sollen die Erfindung jedoch nicht einschränken, sondern nur erläutern. Es zeigt in schematischer Darstellung:
- Figur 1: Schnitt durch eine einwindige Spule mit zwei miteinander verschweißten Blechplatten
- Figur 2: Schrägbild einer zweiwindigen Spule
- Figur 3: Schema einer "Hammerspule"

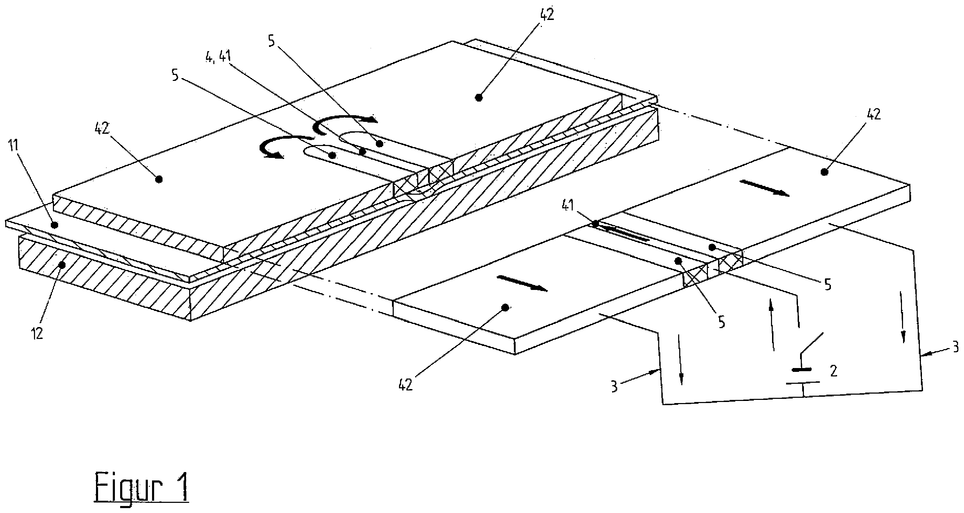

In Figur 1 ist eine einwindige Spule in Form eines E im Schrägbild dargestellt und zeichnerisch quer zu den drei Schenkeln des E durchschnitten. Der Schnitt ist durch die darunter angeordneten, miteinander zu verschweißenden Blechplatte 11 und das darunter befindliche Metallteil 12 fortgesetzt.

Im rechten, zeichnerisch abgeschnittenen Teil der Spule 4 ist in der Mitte der Aktivteil 41 zu sehen. Er grenzt an zwei einander gegenüberliegenden Außenflächen an jeweils einen Kühlisolator 5 an, der durch eine kreuzschraffierte Stirnseite markiert ist. An die beiden anderen Flächen jedes Kühlisolators 5 grenzt je ein Passivteil 42 der Spule 4 an.
In Figur 1 ist mit Pfeilen eingezeichnet, wie der elektrische Strom aus der Energiequelle 2 durch die Spule 4 hindurch läuft:
Wenn der Schalter geschlossen wird, so fließt der Strom in den Aktivteil 41 hinein und weiter durch den zeichnerisch herausgeschnittenen und daher nicht sichtbaren Teil der Spule 4 hindurch in den oben dargestellten Bereich hinein.

In Figur 1 ist sehr gut nachvollziehbar, dass der Strom sich beim Heraustreten aus dem Aktivteil 41 aufzweigt und der eine Teile des Stromes weiter in den linken Passivteil 42 der Spule 4 fließt und der andere Teil des Stromes in den rechts dargestellten Passivteil 42 der Spule 4 strömt.

Durch die in Figur 1 zeichnerisch herausgeschnittenen und daher nicht sichtbaren Abschnitte der Passivteile 42 der Spule 4 fließt der Strom zurück in die Stromleiter 3 bis sich der Stromkreis bei der Energiequelle 2 wieder schließt.

In Figur 1 wird also sichtbar, dass der Strom in einem linken und einem rechten Stromkreis fließt. Da sich beide Stromkreise jedoch in dem Aktivteil 41 in der Mitte der Spule 4 überlagern, wird eine derartige Spule als "einwindige" Spule bezeichnet.

In Figur 1 ist sehr gut nachvollziehbar, dass die Stromdichte im Aktivteil 41 erheblich größer ist, als in den beiden Passivteilen 42: Dazu muss nur die Querschnittsfläche des Aktivteils 41 mit der Summe der Querschnittsflächen der beiden Passivteile 42 verglichen werden. Aus Figur 1 lässt sich entnehmen, dass die Querschnittsfläche des Aktivteiles 41 nur etwa ein Zehntel der Querschnittsfläche beider Passivteile 42 beträgt. Daraus folgt, dass die Stromdichte im Aktivteil 41 rund zehnmal größer ist, als die Stromdichte in den beiden Passivteilen 42.

Dieses Verhältnis erklärt auch nochmals die Benennung des mittleren Schenkels der Spule als "Aktivteil", weil dort die Stromdichte und damit auch die magnetische Feldstärke pro Flächeneinheit des zu verschweißenden Bleches zehnmal größer sind als im Bereich der Passivteile. Daraus folgt, dass nur unterhalb des Aktivteils 41 derart hohe Kräfte auf die Blechplatte 11 ausgeübt werden, dass sie schlagartig nach unten in Richtung auf das Metallteil 12 hin "ausgebeult" wird.

In Figur 1 ist nachvollziehbar, dass der "ausgebeulte" Bereich der Blechplatte 11 auf seinem Weg vom ebenen Zustand der Blechplatte 12 bis herunter zum Aufschlagen auf das Metallteil 12 kontinuierlich beschleunigt worden ist und deshalb mit einer hohen Geschwindigkeit auf das Blechteil 12 auftraf.

In Figur 1 ist das wesentliche erfinderische Merkmal, nämlich der Kühlisolator 5 zwischen dem Aktivteil 41 und den beiden Passivteilen 42 der Spule 4 sehr deutlich zu sehen. Nachvollziehbar ist, dass der Kühlisolator 5 auf einem großen Teil der Fläche des Aktivteils 41 aufliegt und mit einem eben so großen Flächenanteil das Passivteil 42 berührt.

Da der Kühlisolator 5 zwar elektrisch ein guter Isolator ist, jedoch thermisch ein sehr guter Leiter, kann in Figur 1 nachempfunden werden, wie die Verlustwärme aus dem Aktivteil 41 über die beiden flankierenden Kühlisolatoren 5 in die angrenzenden Passivteile 42 abfließt. Dabei ist zu beachten, dass im Aktivteil 41 die Stromdichte rund zehnmal höher ist, als in den beiden Passivteilen 42. Deshalb ist auch die am ohmschen Widerstand des Aktivteils 41 anfallende Verlustwärme im gleichen Maße größer wie in den Passivteilen und das Temperaturgefälle vom Aktivteil 41 zu den beiden Passivteilen 42 entsprechend groß.

In Figur 1 ist auch eine weitere Funktion der beiden Kühlisolatoren 5 nachzuvollziehen, nämlich die mechanische Abstützung des Aktivteils 41. Wiederum durch seinen relativ dünnen Querschnitt bedingt, ist der Aktivteil 41 mechanisch längst nicht so hoch belastbar wie die beiden Passivteile 42.

In Figur 1 kann gut nachvollzogen werden, dass beim Verformen der Blechplatte 12 eine Kraft auf das Blech ausgeübt wird, die nach unten gerichtet ist. Eine gleich große Gegenkraft, die also nach oben gerichtet ist, wirkt auf das Aktivteil 41 der Spule 4. Der Vergleich der Querschnitte des Aktivteils 41 und der beiden Passivteile 42 zeigt, dass das Aktivteil 41 dieser Kraft einen weit geringeren Widerstand entgegen setzen kann als die beiden Passivteile 42. Deshalb ist es eine höchst willkommene Funktion der beiden Kühlisolatoren 5, dass sie von dieser etwa vertikal wirkenden Kraft einen Teil auf die beiden, erheblich belastbareren Passivteile 42 übertragen.

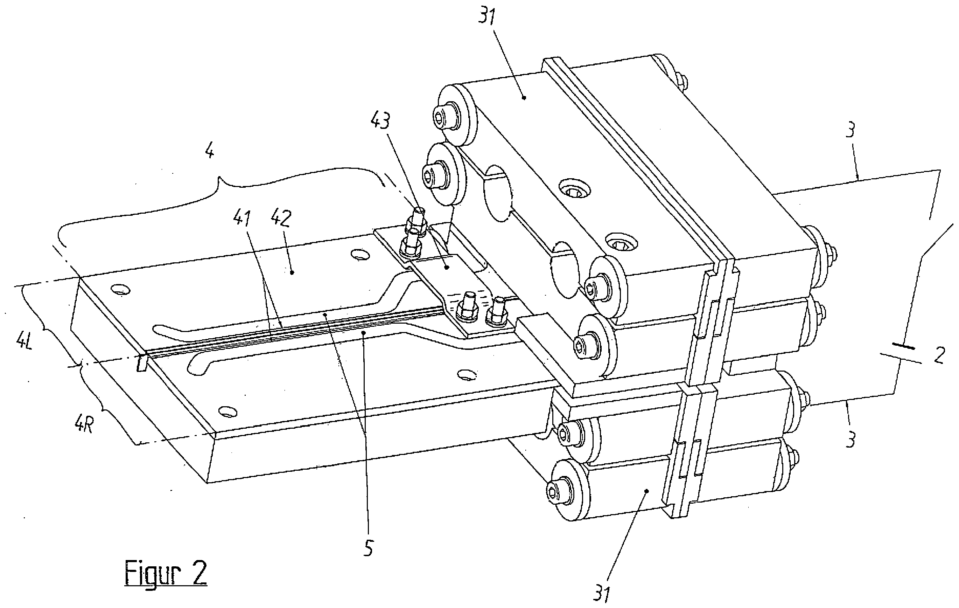

In **Figur 2** ist eine erfindungsgemäße Spule in der Ausführungsform als sog. "zweiwindige" Spule 4 in Fluchtpunktperspektive gezeichnet. In der linken Hälfte sind die beiden Windungen 4 L und 4 R der Spule 4 zu erkennen. Deutlich wird, dass von dieser Spule 4 nur der Strombügel 43 zur Verbindung der linken Teilwindung 4 L und der rechten Teilwindung 4 R über die Ebene der Windungen herausragt.

In Figur 2 wird schnell deutlich, wie der Strom unterhalb des Strombügels 43 in die linke Teilwindung 4 L der Spule hineinfließt. Aus dem Stromleiter 3 tritt er über den Anschlussblock 31 in die Spule 4 ein. Kurz nach dem Eintreten muss er sich auf den erheblich geringeren Querschnitt des Aktivteiles 41 "zusammendrängen" lassen. Er strömt dann mit einer relativ hohen Stromdichte durch den relativ sehr schlanken ersten Aktivteil 41, der parallel zu einem ersten Kühlisolator 5 verläuft, an den er flächig angrenzt.

An seinem linken Ende erweitert sich der Querschnitt des Aktivteiles 41 deutlich und geht in ein erstes Passivteil 42 über, dessen Querschnitt etwa zehnmal so groß wie der des Aktivteiles ist. Deshalb reduziert sich auch die Stromdichte entsprechend.

Aus dem ersten Passivteil 42 der linken Teilwindung 4 L fließt der Strom durch den Strombügel 43 über die Eingangsleitung hinweg in die rechte Teilwindung 4 R der Spule 4. Auch hier verengt sich das Profil des zweiten Aktivteiles 41 ganz dramatisch gegenüber dem Eingangsbereich. Am Ende des zweiten Aktivteiles 41 geht der Strom auch in der rechten Teilspule 4 R kontinuierlich in den erheblich größeren Querschnitt des zweiten Passivteiles 42 über.

Dieser große Querschnitt ist mit der Energiequelle 2 über den Anschlussblock 31 und den Stromleiter 3 verbunden.

In Figur 2 sind die Spule 4 und die beiden Anschlussblöcke 31 für die beiden Stromleiter 3 in realitätsnaher Ausführung gezeichnet. Die in den beiden Schraubklemmblöcken 31 erkennbaren, großen zylindrischen Öffnungen machen deutlich, welch erhebliche Querschnitte für den Stromleiter 3 erforderlich sind, da ein sehr hoher Spitzenstrom während der elektromagnetischen Pulsschweißung fließt. Der Übersichtlichkeit halber sind die Stromleiter 3 ebenso wie die Spannungsquelle 2 jedoch nur als Blockschaltbild symbolisiert.
In Figur 2 wird deutlich, dass der Strom zweimal durch den aktiven Bereich der Spule 4 strömt, nämlich durch die beiden Aktivteile 41 der beiden Teilspulen 4 L und 4 R. Es ist plausibel, dass dadurch die Stromdichte gegenüber einer einwindigen Spule verdoppelt wird. In Figur 2 wird jedoch auch sehr eindrucksvoll sichtbar, dass dazu ein extrem kleiner Querschnitt der Aktivteile erforderlich ist. Ohne die an den Aktivteil angrenzenden Kühlisolatoren würden die Aktivteile deshalb brechen oder sogar abschmelzen.

Figur 2 plausibilisiert sehr gut, dass die Kühlisolatoren 5 zusätzlich auch zu einer mechanischen Abstützung der Aktivteile 41 auf den Passivteilen 42 dienen.

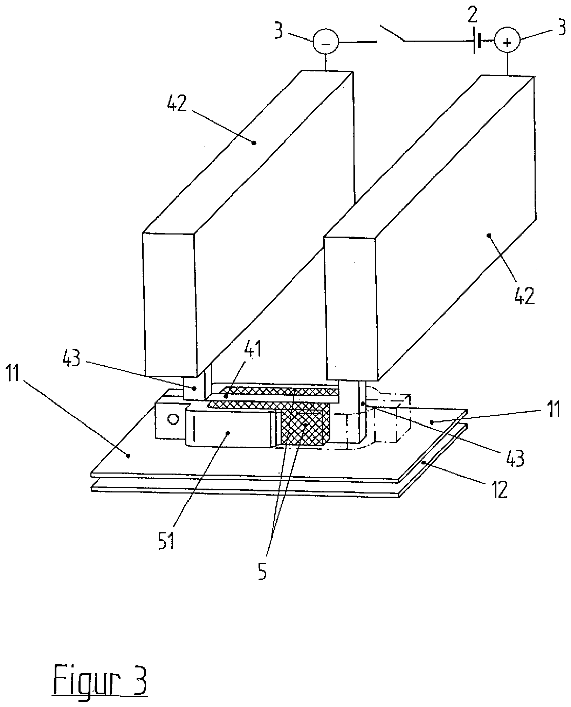

In **Figur 3** ist als perspektivisches Schemabild die Grundstruktur einer sog. "Hammerspule" gezeichnet sowie eine Blechplatte 11, die mit dem Metallteil 12 unterhalb des Aktivteiles 41 verschweißt werden soll. Sehr gut zu erkennen ist, dass dazu die beiden Metallteile 11, 12 voneinander beabstandet sind.

In dieser Ausführungsform sind die beiden Passivteile 42 jeweils zwei Platten, die parallel und mit einem Abstand zueinander ausgerichtet sind. In der Praxis sind sie mit - hier nicht gezeichneten - Isolierelementen aufeinander abgestützt. An ihrem vorderen Ende sind diese beiden Passivteile 42 durch die beiden senkrecht nach oben abgewinkelten Endabschnitten 43 des Aktivteils 41 miteinander verbunden.

Der horizontale Aktivteil 41 bildet zusammen mit den beiden Endabschnitten 43 eine bügeiförmige Stromführung, deren stromführender Querschnitt erheblich kleiner ist als der stromleitende Querschnitt der beiden Passivteile 42.

Bei der Ausführungsform gemäß Figur ist an beide Seiten des Aktivteils 41 je ein Kühlisolator 5 angefügt, wobei sich Aktivteil 41 und Kühlisolatoren 5 flächig berühren. Um die beiden Kühlisolatoren 5 auf den beiden Seiten des Aktivteiles 41 zusammenzuhalten, ist in Figur 3 eine um die beiden Kühlisolatoren herum verlaufenden Andruckvorrichtung 51 eingezeichnet. Nur deren links vorne zu sehendes Teil ist vollständig dargestellt; vom Rest sind nur die Umrisslinien mit einer gepunkteten Linie markiert.

Die Andruckvorrichtung 51 besteht in dieser Ausführungsform aus zwei etwa U-förmigen Metallteilen, die sich flächig an die beiden Kühlisolatoren 5 andrücken. Davon ist nur die Hälfte des vorderen Andruckbügels gezeichnet. Links ist zu erkennen, wie die eine Hälfte der Andruckvorrichtung 51 über eine Verschraubung mit der anderen Hälfte der Andruckvorrichtung 51 verbunden werden kann. Der Übersichtlichkeit halber sind die rechte Hälfte des vorderen Andruckbügels und der hintere Andruckbügel nur durch gepunktete Umrisslinien markiert, sodass von der Andruckvorrichtung 51 nur ein Viertel in Figur 3 als zeichnerisch heraus gebrochener Teil zu sehen ist.

Ebenso wie auch in den Figuren 1 und 2 sind die Stromleiter 3 und die Energiequelle 2 sowie der Schalter zu deren Aktivierung nur als Blockschaltbild in nicht perspektivischer Darstellung eingetragen.

### Bezugszeichenliste

- 11: Blechplatte, Werkstück, mit Metallteil 12 zu verschweißen
- 12: Metallteil, Werkstück mit Blechplatte 11 zu verschweißen
- 2: Stromquelle, liefert Stromimpuls in die Spule 4
- 3: Stromleiter, verbindet Stromquelle 2 mit Spule 4
- 31: Anschlussblock, verbindet Stromleiter 3 mit Spule 4
- 4: Spule
- 41: Aktivteile der Spule 4, mit sehr hoher Stromdichte, bewirken Verschweißung der Blechplatte 11
- 42: Passivteile der Spule 4 mit geringer Stromdichte
- 43: Strombügel, überbrückt bei mehrwindigen Spulen die Zuleitung zu einer Teilspule
- 4 L: linke Teilwindung einer zweiwindigen Spule
- 4 R: rechte Teilwindung einer zweiwindigen Spule
- 5: Kühlisolator, kühlt, isoliert und stabilisiert den Aktivteil 41

## Patentansprüche

1. Elektromagnetisches Pulsschweißgerät zur Verbindung einer Blechplatte (11) mit einem Metallteil (12), bestehend aus
- einer elektrischen Energiequelle (2), die über
- Stromleiter (3) mit
- einer Spule (4) verbunden ist, die einen Aktivteil (41) und einen Passivteil (42) aufweist, welche in unmittelbarer Nähe der Blechplatte (11) verlaufen, wobei die Blechplatte (11) zum Metallteil (12) beabstandet ist,
- der Passivteil (42) der Spule (4) einen größeren Querschnitt aufweist als der Aktivteil (41) und
- Aktivteil (41) und Passivteil (42) jeweils mit einem Teil ihrer Oberfläche formschlüssig an einen Isolator (5) angrenzen, dessen Werkstoff im Vergleich zum Material der Spule (4) eine relativ niedrige magnetische und elektrische Leitfähigkeit aufweist
**dadurch gekennzeichnet, dass**
- der Isolator ein Kühlisolator (5) ist und im Vergleich zum Material der Spule eine relativ hohe thermische Leitfähigkeit aufweist, und
- die an den Kühlisolator (5) angrenzenden Oberflächenteile des Aktivteils (41) und des Passivteils (42) flächengleich sind.

2. Pulsschweißgerät nach Anspruch 1, **dadurch gekennzeichnet, dass** der Kühlisolator (5) aus Bornitrid besteht.

3. Pulsschweißgerät nach einem der vorhergehenden Ansprüche, **dadurch gekennzeichnet, dass** der Aktivteil (41) ein längliches Profil ist, das auf zwei gegenüberliegenden Längsseiten von je einem Passivteil (42) flankiert wird, das parallel zum und in einem Abstand vom Aktivteil (41) angeordnet ist und die beiden Zwischenräume zwischen dem Aktivteil (41) und den beiden Passivteilen (42) mit je einem Kühlisolator (5) ausgefüllt sind.

4. Pulsschweißgerät nach einem der vorhergehenden Ansprüche, **dadurch gekennzeichnet, dass**
- eine zweiwindige Spule (4) mit Ausnahme eines Strombügels (43) zur Verbindung der beiden Windungen in einer Ebene verläuft, und
- die Aktivteile (41) beider Windungen parallel und zueinander beabstandet angeordnet sind, und
- an der dem jeweils anderen Aktivteil (41) gegenüber liegenden Fläche jedes Aktivteils (41) ein Kühlisolator (5) aufliegt, und
- an dessen gegenüberliegender Fläche der Passivteil (42) einer jeden Windung anliegt.

5. Elektromagnetisches Pulsschweißgerät zur Verbindung einer Blechplatte (11) mit einem Metallteil (12), wobei die Blechplatte (11) zum Metallteil (12) beabstandet ist, bestehend aus
- einer elektrischen Energiequelle (2), die über
- Stromleiter (3) mit
- einer Spule (4) verbunden ist, die einen Aktivteil (41) und einen Passivteil (42) aufweist, und
- nur der Aktivteil (41) in unmittelbarer Nähe der Blechplatte (11) verläuft und mit einem Teil seiner Oberfläche formschlüssig an einen Isolator (5) angrenzt, dessen Werkstoff im Vergleich zum Material der Spule (4) eine relativ niedrige magnetische und elektrische Leitfähigkeit aufweist,
- wobei der Aktivteil (41) aus einem länglichen Profil besteht, an beiden Enden dieses Profils je ein kurzer Endabschnitt (43) abgewinkelt ist, jeder Endabschnitt (43) mit jeweils einem Passivteil (42) verbunden ist, und die beiden Endabschnitte (43) jeweils etwa parallel zueinander ausgerichtet sind,
**dadurch gekennzeichnet, dass**
- der Passivteil (42) der Spule (4) einen größeren Querschnitt aufweist als der Aktivteil (41) und
- der Isolator ein Kühlisolator (5) ist und im Vergleich zum Material der Spule eine relativ hohe thermische Leitfähigkeit aufweist, und
- die beiden zu den Endabschnitten (43) parallelen Flächen des Aktivteils (41) jeweils an den Kühlisolator (5) angrenzen.

6. Pulsschweißgerät nach Anspruch 5, **dadurch gekennzeichnet, dass** an den Außenseiten beider Kühlisolatoren (5) ein in sich geschlossenes Metallband oder eine andere Andruckvorrichtung (51) anliegt.

7. Pulsschweißgerät nach den Ansprüchen 5 oder 6, **dadurch gekennzeichnet, dass** ein Endabschnitt (43) in einer Nut in der Großfläche eines plattenförmigen Passivteils (42) befestigt ist.

8. Pulsschweißgerät nach einem der vorhergehenden Ansprüche, **dadurch gekennzeichnet, dass** bei der Spule (4) im Bereich des Überganges vom Aktivteil (41) zum Passivteil (42) die Innenkanten und/oder die Oberflächen kontinuierlich gerundet sind.

9. Pulsschweißgerät nach einem der vorhergehenden Ansprüche, **dadurch gekennzeichnet, dass** der Abstand zwischen dem zu verschweißenden Bereich der Blechplatte (11) und dem Metallteil (12) etwa in der Größenordnung von 0,3 bis 1,0 Millimeter liegt.

10. Pulsschweißgerät nach einem der vorhergehenden Ansprüche, **dadurch gekennzeichnet, dass** in die Blechplatte (11) im oder nahe am zu verschweißenden Bereich vor dem Verschweißen wenigstens eine Auswölbung und/oder eine längliche Sicke einbringbar ist, deren Erhebung über die benachbarten Bereiche der Blechoberfläche dem zur Verschweißung erforderlichen Abstand zwischen Blechplatte (11) und Metallteil (12) entspricht.

11. Pulsschweißgerät nach Anspruch 10, **dadurch gekennzeichnet, dass** die Auswölbung oder die Sicke in der Mitte des zu verschweißenden Bereiches der Blechplatte (11) angeordnet ist.

12. Pulsschweißgerät nach Anspruch 10, **dadurch gekennzeichnet, dass** eine Reihe von zueinander beabstandeten Auswölbungen am Rand des zu verschweißenden Bereiches der Blechplatte (11) angeordnet ist.

13. Pulsschweißgerät nach Anspruch 10, **dadurch gekennzeichnet, dass** die Auswölbung und/oder die Sicke komplementär zu derjenigen Ausformung der Blechplatte (11) geformt sind, die sich nach der Verschweißung einer zuvor ebenen Blechplatte (11) einstellen würde.

14. Pulsschweißgerät nach einem der Ansprüche 10 - 13, **dadurch gekennzeichnet, dass** damit vor der Verschweißung auch die erforderlichen Auswölbungen und/oder die benötigten Sicken in dieBlechplatte (11) einformbar sind.

15. Pulsschweißgerät nach Anspruch 14, **dadurch gekennzeichnet, dass**
- jede Blechplatte (11) darin nur einmal eingelegt oder eingespannt wird und
- in einem ersten Bearbeitungsschritt - z.B. mittels Elektromagnetischem Puls-Fügen (EMPF) - im oder am zu verschweißenden Bereich eine Auswölbung und/oder eine Sicke eingeformt wird und
- in einem zweiten Bearbeitungsschritt dieser Bereich der Blechplatte (11) mit einem Metallteil (12) verschweißt wird.

16. Pulsschweißgerät nach einem der vorhergehenden Ansprüche 10 bis 15, **dadurch gekennzeichnet, dass** es eine Aufnahme zum Einlegen oder Einspannen einer Biechplatte (11) aufweist,
- in welcher der Blechplatte (11) in einem ersten Schritt wenigstens eine Auswölbung und/oder wenigstens eine Sicke einprägbar ist und
- in einem zweiten Schritt die Blechplatte (11) mit einem Metallteil (12) im Bereich der Auswölbung oder Sicke zumindest partiell verschweißbar ist.

## Claims

1. Electromagnetic pulse welding device for joining a sheet-metal plate (11) to a metal part (12), consisting of
- an electrical energy source (2), which is connected via
- electrical conductors (3) to
- a coil (4), which comprises an active portion (41) and a passive portion (42), which extend in the direct vicinity of the sheet-metal plate (11), the sheet-metal plate (11) being spaced from the metal part (12),
- the passive portion (42) of the coil (4) having a larger cross-section than the active portion (41) and
- the active portion (41) and passive portion (42), in each case with a portion of their surface, adjoin, in an interlocking manner, an insulator, of which the material, in comparison to the material of the coil (4) has a relatively low magnetic and electrical conductivity,
**characterised in that,**
- the insulator is a cooling insulator (5) and, in comparison to the material of the coil, has a relatively high thermal conductivity, and
- the surface portions of the active portion (41) and of the passive portion (42) that adjoin with the cooling insulator (5) are essentially coextensive therewith.

2. Pulse welding device according to claim 1 **characterised in that** the cooling insulator (5) consists of boron nitride.

3. Pulse welding device according to one of the preceding claims, **characterised in that** the active portion (41) is an elongated profile, which is flanked on two mutually opposite longitudinal sides by a passive portion (42) in each case, which is disposed parallel to and at a spacing from the active portion (41) and the two interspaces between the active portion (41) and the two passive portions (42) are filled with a cooling insulator (5) in each case.

4. Pulse welding device according to one of the preceding claims, **characterised in that**
- a two-winding coil (4) with the exception of a conductor loop (43) extends for connecting the two windings in one plane
- the active portions (41) of both windings are disposed parallel and spaced from one another, and
- On that surface of each active portion (41) that is opposite the active portion (41) in each case, a cooling insulator (5) rests, and
- on the opposite face thereof, the passive portion (42) of each winding rests.

5. Electromagnetic pulse welding device for joining a sheet-metal plate (11) to a metal part (12), the sheet metal plate (11), being spaced from the metal part (12), consisting of
- an electrical energy source (2), which is connected via
- electrical conductors (3) to
- a coil (4), which comprises an active portion (41) and a passive portion (42),
- the passive portion (42) of the coil (4) having a larger cross-section than the active portion (41) and
- only the active portion (41) extends in the direct vicinity of the sheet-metal plate and with a portion of its surface, adjoins, in an interlocking manner, an insulator, of which the material, in comparison to the material of the coil (4) has a relatively low magnetic and electrical conductivity,
- the active portion (41) consisting of an elongated profile, at both ends of said profile, a short end section (43) being angled, each end section (43) being connected to a passive portion (42) in each case, and the two end section (43) being aligned parallel to one another in each case
**characterised in that**
- the insulator is a cooling insulator (5) and, in comparison to the material of the coil, has a relatively high thermal conductivity, and
- those two surfaces of the active portion (41) that are parallel to the end sections (43) are in each case contiguous with a cooling insulator (5).

6. Pulse welding device according to claim 5, **characterised in that**, at the outer sides of both cooling insulators (5), there lies a self-contained metal strip or another pressure device (51).<0}

7. Pulse welding device according to claims 5 or 6, **characterised in that** an end section (43) is fastened in a groove in the large surface of a plate-shaped passive part (42).

8. Pulse welding device according to one of the preceding claims, **characterised in that**, at the coil (4), in the region of the transition from the active part (41) to the passive part (42), the inner edges and/or the surfaces are continuously rounded.

9. Pulse welding device according to one of the preceding claims, **characterised in that** the distance between that region of the metal sheet (11) that is to be welded and the metal part (12) is approximately of the order of 0.3 to 1.0 millimetres.

10. Pulse welding device according to one of the preceding claims, **characterised in that** into the metal sheet (11), at or close to the region to be welded, before the welding, there can be introduced at least one bulge and/or an elongated bead, the elevation of which above the adjacent regions of the sheet-metal surface corresponds to the distance, which is necessary for welding, between the metal sheet (11) and the metal part (12).

11. Pulse welding device according to claim 10, **characterised in that** the bulging or the bead is located in the centre of that region of the sheet metal (11) that is to be welded

12. Pulse welding device according to claim 10, **characterised in that** a row of bulges, which are spaced from one another, are located at the edge of that region of the metal sheet 11 that is to be welded.

13. Pulse welding device according to claim 10, **characterised in that** the bulging and/or the bead is complementary to that deformation of the metal sheet (11) that would be established after the welding of a metal sheet (11) that was previously flat.

14. Pulse welding device according to one of the claims 10-13, **characterised in that**, before welding, the necessary bulges and/or the required beads can thereby also be formed into the metal sheet 11.

15. Pulse welding device according to claim 14, **characterised in that**
- each metal sheet (11) then only needs to be inserted or clamped once
- In a first processing step - e.g. by means of an electromagnetic pulse joining (EMPJ)- in or on that region that is to be welded a bulge and/or a bead is formed in, and
- In a second processing step, this region of the metal sheet (11) is welded to a metal part (12).

16. Pulse welding device according to one of the preceding claims 10 to 15, **characterised in that** it comprises a receptacle for insertion or clamping of a metal sheet (11),.
- in which, in the metal sheet (11), in a first step, at least one bulge and/or at least one bead can be impressed
- in a second step, the metal sheet (11) is welded to a metal part (12) in the region of the bulge or bead can be at least partially welded.

## Revendications

1. Appareil électromagnétique de soudage par impulsion destiné à relier une plaque de tôle (11) à une pièce métallique (12), consistant en
- une source d'énergie électrique (2) qui est, via un
- conducteur électrique (3), reliée à
- une bobine (4) présentant une pièce active (41) et une pièce passive (42) qui courent à proximité immédiate de la plaque de tôle (11), sachant que la plaque de tôle (11) est située à une certaine distance de la pièce métallique (12),
- la pièce passive (42) de la bobine (4) présentant une section plus grande que celle de la pièce active (41),
- la pièce active (41) et la pièce passive (42) jouxtant l'une et l'autre, sur une partie de leur surface en adoptant une forme complémentaire, un isolant (5) dont le matériau présente une conductivité magnétique et électrique relativement basse par rapport au matériau de la bobine (4)
**caractérisé par le fait que**
- l'isolant est un isolant de refroidissement (5) et présente une conductivité thermique relativement élevée par rapport au matériau de la bobine, et
- que les pièces de surface de là pièce active (41) et de la pièce passive (42) jouxtant l'isolant de refroidissement (5) ont essentiellement la même surface.

2. Appareil de soudage par impulsion selon la revendication 1, **caractérisé par le fait que** l'isolant de refroidissement (5) consiste en nitrure de bore.

3. Appareil de soudage par impulsion selon une des revendications précédentes, **caractérisé par le fait que** la pièce active (41) est un profilé longitudinal qui est flanqué sur chacun de ses deux côtés longitudinaux situés l'un en face de l'autre d'une pièce passive (42) qui est disposée parallèlement et à une certaine distance de la pièce active (41), et que les deux espaces intermédiaires entre la pièce active (41) et les deux pièces passives (42) sont chacun remplis d'un isolant de refroidissement (5).

4. Appareil de soudage par impulsion selon une des revendications précédentes, **caractérisé par le fait**
- **qu'**une bobine à deux spires (4) destinée à relier les deux spires court dans un seul plan, à l'exception d'un étrier électrique (43),
- les pièces actives (41) des deux spires étant disposées parallèlement et à une certaine distance l'une de l'autre,
- un isolant de refroidissement (5) reposant sur la surface de chaque pièce active (41) située en face de chaque autre pièce active (41),
- la pièce passive (42) de chaque spire reposant sur la surface opposée de ce dernier.

5. Appareil électromagnétique de soudage par impulsion destiné à relier une plaque de tôle (11) à une pièce métallique (12), sachant que la plaque de tôle (11) est située à une certaine distance de la pièce métallique (12), consistant en
- une source d'énergie électrique (2) qui est reliée, via un
- conducteur électrique (3), à
- une bobine (4) présentant une pièce active (41) et une pièce passive (42),
- la pièce passive (42) de la bobine (4) présentant une section plus grande que celle de la pièce active (41),
- seule la pièce active (41) courant à proximité immédiate de la plaque de tôle (11) et jouxtant avec une partie de sa surface et en adoptant une forme complémentaire un isolant (5) dont le matériau présente une conductivité magnétique et électrique relativement basse par rapport au matériau de la bobine (4),
- sachant que la pièce active (41) consiste en un profilé longitudinal, une section finale courte (43) étant coudée sur les deux extrémités de ce profilé longitudinal, chaque section finale (43) étant reliée à chacune des pièces passives (42), les deux sections finales (43) étant à chaque fois orientées à peu près parallèlement les unes aux autres,
**caractérisé par le fait que**
- l'isolant est un isolant de refroidissement (5) et présente une conductivité thermique relativement élevée par rapport au matériau de la bobine, et
- que chacune des deux surfaces de la pièce active (41) parallèles aux sections finales jouxtent l'isolant de refroidissement (5).

6. Appareil de soudage par impulsion selon la revendication 5, **caractérisé par le fait qu'**une bande métallique refermée sur elle-même ou un autre dispositif de pressage (51) repose sur les faces extérieures des deux isolants de refroidissement (5).

7. Appareil de soudage par impulsion les revendications 5 ou 6, **caractérisé par le fait qu'**une section finale (43) est fixée dans une rainure dans la grande surface d'une pièce passive (42) en forme de plaque.

8. Appareil de soudage par impulsion selon une des revendications précédentes, **caractérisé par le fait que** pour la bobine (4) dans la zone de la transition de la pièce active (41) à la pièce passive (42), les bords intérieurs et/ou les surfaces sont arrondis de façon continue.

9. Appareil de soudage par impulsion selon une des revendications précédentes, **caractérisé par le fait que** la distance entre la zone à souder de la plaque de tôle (11) et la pièce métallique (12) se situe dans un ordre de taille allant de 0,3 à 1,0 millimètre.

10. Appareil de soudage par impulsion selon une des revendications précédentes, **caractérisé par le fait que** dans la plaque de tôle (11), dans ou à proximité de la zone à souder et avant le soudage, il est possible d'apporter au moins une partie bombée et/ou une bordure longitudinale dont l'élévation au-dessus des zones voisines de la surface de la tôle correspond à la distance entre la plaque de tôle (11) et la pièce métallique (12) nécessaire au soudage.

11. Appareil de soudage par impulsion selon la revendication 10, **caractérisé par le fait que** la partie bombée ou la bordure est disposée au milieu de la zone à souder de la plaque de tôle (11).

12. Appareil de soudage par impulsion selon la revendication 10, **caractérisé par le fait qu'**une série de parties bombées situées à une certaine distance les unes des autres est disposée au bord de la zone à souder de la plaque de tôle (11).

13. Appareil de soudage par impulsion selon la revendication 10, **caractérisé par le fait que** la partie bombée et/ou la bordure ont une forme complémentaire à la forme prise par la plaque de tôle (11) qui se réglerait après le soudage d'une plaque de tôle (11) préalablement plane.

14. Appareil de soudage par impulsion selon une des revendications 10 à 13, **caractérisé par le fait que** les parties bombées nécessaires et/ou les bordures nécessaires peuvent être formées dans la plaque de tôle (11).

15. Appareil de soudage par impulsion selon la revendication 14, **caractérisé par le fait que**
- chaque plaque de tôle (11) ne peut y être insérée ou serrée qu'une fois et
- qu'une partie bombée et/ou une bordure est formée dans une première étape de traitement - p. ex. au moyen de joints réalisés par impulsions électromagnétiques - dans ou sur la zone à souder,
- cette zone étant, dans une deuxième étape de traitement de cette zone de la plaque de tôle (11), soudée à une pièce métallique (12).

16. Appareil de soudage par impulsion selon une des revendications précédentes 10 à 15, **caractérisé par le fait qu'**il présente une réception pour insérer ou serrer une plaque de tôle (11),
- dans laquelle plaque de tôle (11) il est possible d'estamper, dans une première étape, au moins une partie bombée et/ou au moins une bordure,
- la plaque de tôle (11) pouvant, dans une seconde étape, être au moins partiellement soudée à une pièce métallique (12) dans la zone de la partie bombée ou de la bordure.
